# EUROPÄISCHE PATENTANMELDUNG

(11) **EP 2 866 116 A2**
(43) Veröffentlichungstag der Anmeldung: **29.04.2015**
(21) Anmeldenummer: 14190176.9
(22) Anmeldetag: 23.10.2014
(51) Int. Cl.: G05D 23/02, F01P 7/16

(54) **Thermostatventil**

(30) Priorität: 23.10.2013 DE 102013221574
(71) Anmelder: Behr Thermot-tronik GmbH, 70806 Kornwestheim (DE)
(72) Erfinder: Auweder, Andreas, 71665 Vaihingen/Enz (DE); Beurer, Stefan, 75397 Simmozheim (DE)
(74) Vertreter: Grauel, Andreas

(57) **Zusammenfassung**

Die Erfindung betrifft ein Thermostatventil zum Verbinden einer Wärmequelle, insbesondere eines Getriebes mit einem Wärmetauscher, insbesondere eines Kraftfahrzeugs, welches ein Thermostatventilgehäuse (14) aufweist, in dem ein erster Einlassanschluss (18a) für einen ersten Einlasskanal (19a) und ein zweiter Einlassanschluss (20a) für einen zweiten Einlasskanal (21a) sowie ein erster Auslassanschluss (18b) für einen ersten Auslasskanal (19b) und ein zweiter Auslassanschluss (20b) für einen zweiten Auslasskanal (21b) ausgebildet sind, wobei in einer Aufnahmeöffnung (15) des Thermflstatventilgehäuses (14) ein bewegbares Arbeitselement (16) zum Öffnen und Verschließen der Ein- und Auslasskanäle (18a, 18b, 19a, 19b, 20a, 20b, 21 a, 21b) angeordnet ist und ein separates Drosselelement (46) im Thermostatventilgehäuse (14) zwischen dem ersten Einlassanschluss (18a) und dem ersten Auslassanschluss (18b) angeordnet ist.

## Beschreibung

### Technisches Gebiet

Die Erfindung betrifft ein Thermostatventil für ein Kühlsystem, sowie ein Kühlsystem mit einem Thermostatventil, insbesondere für ein Kraftfahrzeug.

### Stand der Technik

Thermostatventile sind im Stand der Technik bekannt und werden typischerweise in einem Kühlsystem eines flüssigkeitsgekühlten Verbrennungsmotors, insbesondere eines Kraftfahrzeuges zur Regelung eines Kühlmittelkreislaufes mit dem Ziel eingesetzt, möglichst schnell die optimale Temperatur im Verbrennungsmotor zu erreichen, diese unter allen Betriebsbedingungen zu halten und eine Überhitzung im Motor zu verhindern. Dies ist für die Lebensdauer, den Kraftstoffverbrauch und die Abgasentwicklung des Verbrennungsmotors besonders wichtig. Das Thermostatventil wird in der Regel bei zu geringer Motortemperatur nach dem Start oder bei zu geringer Belastung während der Fahrt des Kraftfahrzeuges als ein 2/2-Wegeventil im Kühlmittelkreislauf eingesetzt. Durch das Thermostatventil fließt das aus dem Motor ausströmende Kühlmittel nicht durch einen Kühler des Kühlmittelkreislaufes, sondern direkt über eine Kurzschlussleitung wieder zum Motor zurück.

Thermostatventile, insbesondere Thermostatventile, die als 4/2-Wegeventile ausgebildet sind, werden als Getriebeölthermostate zur Regelung einer Öltemperatur eines Getriebes, beispielsweise Automatikgetrieben in dem Kraftfahrzeug eingesetzt. Ins-besondere bei Automatikgetrieben kann der Schaltkomfort verbessert werden, der Verschleiß vom Getriebe verringert werden und eine Reduzierung der Temperaturschwankungen des Getriebeöls erreicht werden. Somit kann eine längere Verwendbarkeit des Getriebeöls erreicht werden. Letztendlich kann dabei auch eine Kraftstoffeinsparung in den gängigen Fahrzyklen erreicht werden.

Aus der DE 10 2005 057 702 A1 ist eine Kühlanordnung mit einem Thermostatventil zur Überwachung und/oder Einstellung einer Kühlmitteltemperatur bekannt. Die Kühlanordnung weist einen Wärmetauscher und eine Wärmequelle auf, wobei die Wärmequelle in einem Kühlmittel-Strömungspfad angeordnet ist, sowie einen Kurzschlussströmungspfad zum Umgehen des Wärmetauschers. Das Thermostatventil weist einen Drosselkörper zur Volumenstromregelung des Kühlmittels und einen Sensor zur Temperatursensierung des Kühlmittels auf. Der Drosselkörper ist beispielsweise als Tellerventil oder Ringschieber ausgebildet und ist als Funktion der sensierten Temperatur verlagerbar, um einen Strömungspfad zum Wärmetauscher freizugeben.

Die DE 10 2009 012 534 A1 zeigt ein selbstregelndes Thermostatventil zur Veränderung einer Strömungsmenge eines Fluids durch einen Strömungskanal in Abhängigkeit von der Temperatur des Fluids. Das Thermostatventil ist in einem Kühlsystem für eine Brennkraftmaschine angeordnet. Hierbei wird die Strömungsmenge selbsttätig minimiert, wenn das Fluid eine vorbestimmte Solltemperatur aufweist. Ferner erhöht das Thermostatventil die Strömungsmenge bei zunehmender Abweichung von der Solltemperatur, wobei die Strömungsmenge vorzugsweise etwa proportional zur Abweichung von der Solltemperatur zunimmt und wieder abnimmt, wenn sich die Temperatur des Fluids an die Solltemperatur annähert.

Die DE 10 2011 114 308 A1 betrifft eine Ventileinrichtung mit zumindest zwei an eine gemeinsame Zuführungsleitung angeschlossenen Ventilen, wobei ein erstes der Ventile als Rückschlagventil in einer ersten der Zuführungsleitungen abzweigenden Leitung und ein zweites der Ventile als thermisch gesteuertes Thermostatventil in einer zweiten der Zuführungsleitung abzweigenden Leitung vorliegt. Das Rück-schlagventil lässt eine Durchströmung lediglich aus Richtung der Zuführungsleitung zu. Dabei ist vorgesehen, dass ein das Thermostatventil ansteuerndes Schaltelement in oder an einer Kreuzung der ersten Leitung und der zweiten Leitung angeordnet ist.

### Darstellung der Erfindung, Aufgabe, Lösung, Vorteile

Es ist die Aufgabe der vorliegenden Erfindung ein Thermostatventil zu schaffen, das gegenüber dem Stand der Technik hinsichtlich seiner Leistungsfähigkeit optimiert ist.

Die Aufgabe der vorliegenden Erfindung wird durch ein Thermostatventil mit den Merkmalen des Anspruchs 1 gelöst.

Ein Ausführungsbeispiel betrifft ein Thermostatventil zum Verbinden einer Wärmequelle, insbesondere eines Getriebes mit einem Wärmetauscher, insbesondere eines Kraftfahrzeugs, welches ein Thermostatventilgehäuse aufweist, in dem ein erster Einlassanschluss für einen ersten Einlasskanal und ein zweiter Einlassanschluss für einen zweiten Einlasskanal sowie ein erster Auslassanschluss für einen ersten Auslasskanal und ein zweiter Auslassanschluss für einen zweiten Auslasskanal ausgebildet sind, wobei in einer Aufnahmeöffnung des Thermostatventilgehäuses ein bewegbares Arbeitselement zum Öffnen und Verschließen der Ein- und Auslasskanäle angeordnet ist und ein separates Drosselelement im Thermostatventilgehäuse zwischen dem ersten Einlassanschluss und dem ersten Auslassanschluss angeordnet ist.

Bevorzugt ist das Thermostatventil ein 4/2-Wege-Ventil. Das separate Drosselelement ist hierbei nicht mit dem bewegbaren Arbeitselement verbunden, insbesondere nicht mechanisch mit diesem verbunden. Das separate Drosselelement ist insbesondere statisch ausgebildet und gegenüber dem Thermostatgehäuse nicht bewegbar. Das separate Drosselelement bildet hierbei bevorzugt eine Drosselstrecke für ein durch den Einlasskanal strömendes Medium, insbesondere Fluid aus. Das Fluid kann bevorzugt ein Fluid der Wärmequelle sein, beispielsweise das Öl eines Getriebes. Im Betrieb kann das Medium, beispielsweise Fluid aus der Wärmequelle kommend durch den ersten Einlassanschluss und den ersten Einlasskanal in das Thermostatventil einströmen. Bei einer einen Schwellwert übersteigenden Temperatur des einströmenden Mediums öffnet sich das Thermostatventil zum zweiten Auslasskanal und das Medium kann in den Wärmetauscher strömen, wird dort gekühlt und strömt zurück über den zweiten Einlassanschluss in das Thermostatventil und durch den ersten Auslassanschluss in die Wärmequelle. Das im Thermostatgehäuse ausgebildete separate Drosselelement ermöglicht eine Fluidverbindung zwischen dem ersten Einlasskanal dem ersten Auslasskanal insbesondere bei geschlossenem Thermostatventil. Insbesondere können/kann mittels des separaten Drosselelements hierbei ein Druckaufbau und/oder ein Druckabbau reguliert werden.

Bevorzugt weist das separate Drosselelement eine Ausnehmung auf, insbesondere eine im Thermostatventilgehäuse ausgebildete Nut. Hierbei ist die Nut an einem Gehäusewandabschnitt des Thermostatgehäuses angeordnet, der im Wesentlichen parallel zum Verfahrweg des bewegbaren Arbeitselementes verläuft. Die Nut unterschiedliche geometrische Abmessungen aufweisen, beispielsweise schlitzförmig, quadratisch, rechtwinklig oder rund, oval ausgebildet sein. Die Nut kann auch winkelförmig ausgebildet sein, also aus zwei rechteckförmigen Teilnuten aufgebaut sein.

In einer Ausgestaltung des Thermostatventil ist zwischen dem ersten Einlasskanal und dem ersten Auslasskanal ein Bypasskanal angeordnet. Bei hoher Temperatur des Mediums kann der Bypasskanal geschlossen werden mittels des temperaturabhängig verlagerbaren Arbeitselementes.

Bevorzugt ist das Drosselelement zwischen dem ersten Einlasskanal und dem Bypasskanal angeordnet. Das separate Drosselelement kann hierbei einen Druckaufbau in dem Bypasskanal ermöglichen und so kann ein Druckabfall im Kühlkreislauf vermieden werden.

In einer anderen Ausgestaltung oder zusätzlich kann das Drosselelement zwischen dem Bypasskanal und dem ersten Auslassanschluss angeordnet sein.

Besonders bevorzugt sind der erste Einlassanschluss und der zweite Auslassanschluss in axialer Richtung auf einer unterschiedlichen Höhe des Thermostatgehäuses angeordnet.

Bevorzugt ist der Bypasskanal beim Erreichen oder Überschreiten eines oberen Temperaturgrenzwertes geschlossen. Derartige Grenzwerte können für jedes Thermostatventil durch einen Hub-Temperatur-Kennlinie ermittelt werden und stellen bevorzugt einen Knickpunkt im Kennlinien-Diagramm dar, an dem sich die Steigung der Kennlinie ändert.

Im Thermostatventil ist bevorzugt vorgesehen, dass das Arbeitselement eine Kappe aufweist, wobei die Kappe des Arbeitselementes durch ein Federelement belastet ist, welches das Arbeitselement in eine Stellung zwingt in der die Verbindung zwischen dem Bypasskanal und dem ersten Auslasskanal frei ist. Das Federelement ist bevorzugt eine Rückstellfeder, die zwischen einem unteren Kappenabschnitt und einem diesem gegenüberliegenden Gehäuseabschnitt angeordnet ist.

Ferner ist bevorzugt im Thermostatventil eine Kraftentlastungseinrichtung vorgesehen.

Die Aufgabe wird ebenfalls mit einem Kühlsystem, insbesondere für ein Kraftfahrzeug mit einem Kühlkreislauf und einer Wärmequelle, insbesondere einem Getriebe sowie mindestens einem Wärmetauscher gelöst, wobei ein obiges Thermostatventil die Wärmequelle, insbesondere das Getriebe mit dem Wärmetauscher verbindet. Der Wärmetauscher ist bevorzugt ein Öl-Luft-Kühler oder ein Öl-Wasser-Kühler.

Durch die Anordnung des separaten Drosselelementes direkt im Thermostatgehäuse kann ein erhöhter Druckverlust auf das übliche Niveau beim Mediumfluss mit niedriger Temperatur von der Wärmequelle über den Bypasskanal und zurück zur Wärmequelle erzeugt und eingestellt werden. Steigt die Temperatur des Mediums, beispielsweise des Öls an, wird sich ein Dehnstoffelement des Arbeitselementes ausdehnen und eine Kappe des Arbeitselementes wird in axialer Richtung in Richtung einer Steuerkante bewegen. Dies wird entsprechend einer Hub-Temperatur-Kennlinie zunächst langsam erfolgen. Bevorzugt wird ein Hub von 3 mm erzeugt bei einer Temperaturerhöhung von 30° C auf 80° C. Zu diesem Zeitpunkt ist der zweite Auslasskanal zum Wärmetauscher noch geschlossen. Ab einer weiteren Temperaturerhöhung und damit einem größeren Hub, wird das Arbeitselement den zweiten Auslasskanal teilweise öffnen und der Mediumstrom kann in Richtung Wärmetauscher erfolgen. Die Nut des Drosselelementes ist dabei bevorzugt derart ausgestaltet, dass sich der Druckverlust auf einen üblichen Wert und das übliche Nivea beim Mediumfluss von der Wärmequelle über den Bypasskanal und wieder zurück einstellen kann. Somit kann ein Druckabfall verhindert werden, der den Strom des Mediums unterbrechen könnte und so zu einer Unterbrechung des Ölflusses im Getriebe führen könnte, was nachteilig für die Lebensdauer und den Verschleiß des Getriebes sein könnte. Die Hub-Temperatur-Kennlinie zeichnet sich dadurch aus, dass diese bei niedrigen Temperaturen des Mediums, bevorzugt des Fluids, den Öffnungsbeginn zum Bypasskanal hat und dann bei steigenden Temperaturen des Mediums, insbesondere Fluids einen flachen Verlauf bis zum Öffnen des zweiten Auslasskanals über die Steuerkante zum Wärmetauscher aufweist. Dies kennzeichnet den Beginn des Mischbetriebes, bei dem der Mediumstrom sowohl über den Bypasskanal, als auch über den Wärmetauscher wieder zur Wärmequelle, beispielsweise dem Getriebe gelangen kann. Die Hub-Temperatur-Kennlinie verläuft hier steiler. Steigt die Temperatur des Mediums noch weiter, wird das Thermostatventil komplett geöffnet und der zweite Auslasskanal ist vollständig geöffnet, wobei der Bypasskanal bevorzugt geschlossen ist. Somit kann eine größere Kühlleistung für das Medium erreicht werden und einer Überhitzung des Mediums verhindert werden.

Durch den integralen Einbau des separaten Drosselelementes in das Thermostatventilgehäuse ist ein einfacher Aufbau realisiert. Gegenüber im Stand der Technik bekannten Lösungen, ist kein zusätzliches Drosselelement in einer Leitung des Kühlsystems notwendig. Es kann auf zusätzliche Schnittstellen verzichtet werden, die störanfällig sein können, wie beispielsweise Undichtigkeiten. Auch die Montage und damit Herstellung des Thermostatventils im Kühlsystem ist vereinfacht, da ein zusätzlicher Montageschritt entfallen kann. Insgesamt ist ein kleinerer Einbauraum für das Thermostatventil mit separatem Drosselelement realisiert worden und die komplette Einheit von Thermostatventil und Drosselelement weist ein geringes Gewicht auf.

Vorteilhafte Weiterbildungen der vorliegenden Erfindung sind in den Unteransprüchen und in der nachfolgenden Beschreibung der Figuren beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Ausführungsform eines Thermostatventils in einer ersten Position mit einem Hub von 0 mm;
- Fig. 2: ein Ausschnitt des Thermostatventils aus Figur 1 in einer anderen Position mit einem Hub von 3 mm;
- Fig. 3: eine weitere Ausführungsform eines Thermostatventils in Schnittdarstellung;
- Fig. 4: eine alternative Ausführungsform eines Ausschnittes des Thermostatventils von Figur 3;
- Fig. 5: ein Diagramm einer Hub-Temperatur-Kennlinie für das Thermostatventil gemäß der Erfindung.

### Bevorzugte Ausführung der Erfindung

In den nachfolgend beschriebenen Figuren sind identische Gegenstände und/oder Gegenstände mit identischer oder ähnlicher Funktion mit den gleichen Bezugszeichen bezeichnet.

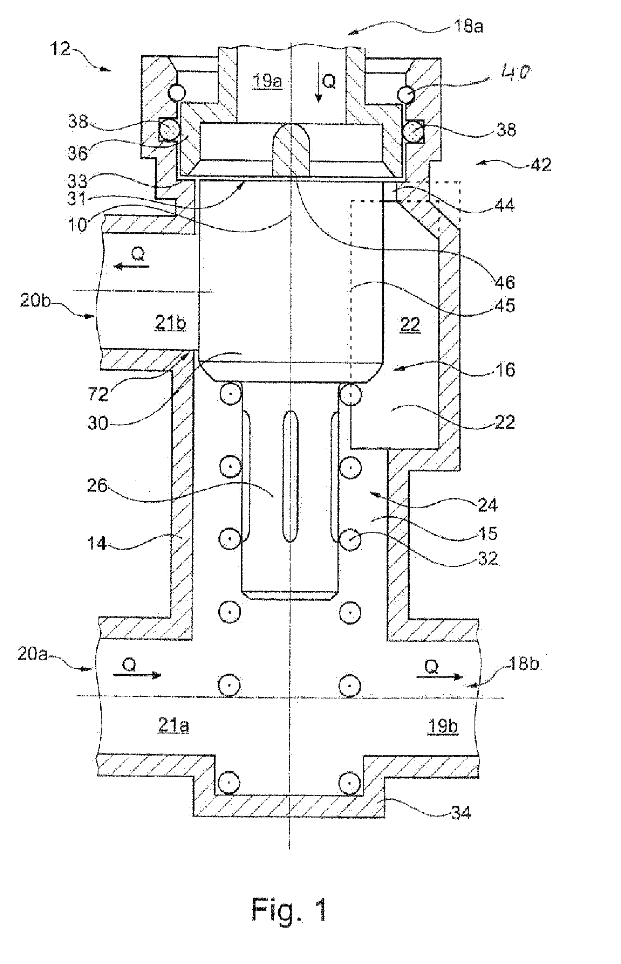

Fig. 1 zeigt in schematischer Schnittdarstellung entlang der Mittelachse 10 ein Thermostatventil 12 mit einem einstückigen Thermostatventilgehäuse 14, in dem in einer Aufnahmeöffnung 15 ein thermostatisches Arbeitselement 16 angeordnet ist. Das Thermostatventil 12 ist in einem Ruhezustand dargestellt und weist einen Hub von 0 mm auf. Das Thermostatventil 12 ist bevorzugt als 4/2-Wegeventil ausgebildet und weist einen ersten Einlassanschluss 18a zu einem ersten Einlasskanal 19a und einen zweiten Einlassanschluss 20a zu einem zweiten Einlasskanal 21 a für ein Medium auf, bevorzugt ein Fluid, das von einer Wärmequelle kommend in das Thermostatventil 12 eintreten kann. Ferner weist das Thermostatventil 12 einen ersten Auslassanschluss 18b zu einem ersten Auslasskanal 19b und einen zweiten Auslassanschluss 20b zu einem zweiten Auslasskanal 21 b für das Medium, bevorzugt Fluid auf. Der Strom des Mediums (Eingangsmediumstrom, Ausgangsmediumstrom) ist jeweils mit einem "Q" und einem, die Richtung angebenden Pfeil bezeichnet. Die Anschlüsse 18a und 18b können mit einer eine Wärmequelle darstellenden Einrichtung, beispielsweise einem Getriebe (nicht dargestellt) verbunden werden. Die zweiten Anschlüsse 20a und 20b werden bevorzugt mit einem Wärmetauscher (nicht dargestellt) verbunden. Der Wärmetauscher kann ein Öl-Luft-Kühler oder ein Öl-Wasser-Kühler sein, insbesondere ein Getriebeölkühler. Mittels des Wärmetauschers wird dem Medium, bevorzugt Fluid, insbesondere dem Öl die Wärme entzogen und an ein anderes Medium abgegeben, welches Luft oder ein anderes Fluid, beispielsweise Wässer oder ein anderes flüssiges Kühlmittel sein kann.

Das Thermostatventil 12 weist einen Bypasskanal 22 auf, mittels dem der Einlasskanal 19a mit dem Auslasskanal 19b kurzgeschlossen werden kann, sodass das Medium, nachdem dieses in das Thermostatventil 12 durch den Einlassanschluss 18a geströmt ist, ohne den Wärmetauscher zu passieren wieder durch den Auslasskanal 21 b und den Auslasskanal 19b sowie den Auslassanschluss 18b in die die Wärmequelle darstellende Einrichtung strömen kann.

Das Arbeitselement 16 weist ein Dehnstoffelement 24 auf, wobei sich bei einer Temperaturänderung der Umgebung des Dehnstoffelements 24 das Volumen eines Dehnstoffs, welches in einer Hülse 26 des Dehnstoffelementes 24 angeordnet ist, ändert. Bevorzugt weist das Dehnstoffelement 24 ein Wachselement als Dehnstoff auf, welches bei einer Temperaturerhöhung ausgehend von einer vorliegenden Umgebungstemperatur sein Volumen vergrößern und bei Temperaturverringerung sein Volumen wieder verkleinern kann. Der Dehnstoff kann aber auch ein anderes Material, beispielsweise Paraffin oder Öl sein, welches bei Temperaturänderung mit einer Volumenänderung reagiert. Das Dehnstoffelement 24 ist mit einem Kolben 28 verbunden, der im Wesentlichen parallel zur Mittelachse 10 angeordnet ist. Ferner weist das Dehnstoffelement 24 eine Kappe 30 auf, die relativ zum Kolben 28 bewegbar ist und deren Position axial entlang der Mittelachse 10 im Gehäuse 14 verlagerbar ist, wodurch deren axiale Position im Thermostatventil 12 verändert werden kann. Ein Federelement 32 ist, die Hülse 26 radial umgebend, axial zwischen der Kappe 30 und einem unteren Gehäuseabschnitt 34 angeordnet und kann als Rückstellfeder 32 für das Dehnstoffelement 24 dienen. Die Kappe 30 und die Hülse 26 sind starr miteinander verbunden und relativ zum Kolben 28 axial bewegbar, wobei bei einer Volumenänderung des Dehnstoffes die Kappe 30 ausgehend von einer Ruhestellung axial in Richtung Gehäuseabschnitt 34 bewegbar ist und das Federelement 32, insbesondere die Rückstellfeder 32 zusammengedrückt wird. Im Ruhezustand drückt das Federelement 32 die Kappe 30 in die Ruheposition, so dass ein Kappenende 31 bündig mit einem Gehäuseabsatz 33 des Thermostatgehäuses 14 abschließt.

Dem Gehäuseabschnitt 34 ist axial gegenüberliegend im Thermostatgehäuse 14 ein Gehäuseeinsatzelement 36 angeordnet, welches mittels eines Dichtelement 38 mit dem Gehäuse 14 verbunden ist. Das Dichtelement 38 kann beispielsweise ein O-Ring sein, der eine fluiddichte Verbindung zwischen dem Gehäuseeinsatzelement 36 und dem Thermostatgehäuse 14 herstellt. Das Gehäuseeinsatzelement 36 ist mit einem Sicherungselement 40, beispielsweise einem Spannring 40 in seiner Position relativ zu dem Thermostatgehäuse 14 gesichert. Der Einlassanschluss 18a ist an dem Gehäuseeinsatzelement 36 ausgebildet. An einem Thermostatventilgehäuseabschnitt 42 ist innenseitig eine Nut 44 ausgebildet, die ein Drosselelement 46 für den in das Thermostatventil 12 eintretenden Mediumstrom Q bildet. Die Nut 44 erstreckt sich am innenliegenden Umfang des Gehäuseabschnitts 42 abschnittsweise axial gesehen auf derselben Höhe wie der Absatz 33. Durch die im Thermostatgehäuse 14 angeordnete Nut 44 ist das Drosselelement 46 in das Thermostatventil 12 integriert. Das Drosselelement 46 ist somit ein separates Drosselelement 46, welches vom Arbeitselement 16 unabhängig ist. Insbesondere sind das Drosselelement 46 und das Arbeitselement 16 nicht mechanisch verbunden. Das Drosselelement 46 ist bevorzugt statisch in dem Thermostatgehäuse 14 ausgebildet und nicht bewegbar. Die Nut 44 kann für den eintretenden Mediumstrom Q bei axial mit einem kleinen Hub in Richtung des unteren Gehäuseabschnitts 34 verlagerter Kappe 30, die den Auslassanschluss 20b noch nicht freigegen hat, in den Bypasskanal 22 strömen und von dem Bypasskanal 22 zu dem ersten Auslassanschluss 18b und damit wieder direkt zu Wärmequelle gelangen, ohne den Wärmetauscher passiert zu haben. Hierbei kann ein erhöhter Druckverlust bei einem Mediumfluss mit niedriger Mediumstemperatur ausgeglichen werden.

Bei nur teilweise geöffnetem Thermostatventil 12 kann ein Mischbetrieb ermöglicht werden, bei dem ein Teil des Mediumstroms durch den Bypasskanal 22 und ein Teil über den Auslassanschluss 20b in und über den Wärmetauscher erfolgen kann.

Eine gestrichelte Linie 45 zeigt einen Regelhub von 10 mm bei geöffnetem Thermostatventil 12, bei dem die Kappe 30 des Arbeitselementes 16 axial um 10 mm in Richtung des Gehäuseabschnittes 34 verlagert ist und der Auslassanschluss 20b freigegeben und damit geöffnet ist, sodass das Medium zum Wärmetauscher strömen kann. Dies ist bevorzugt bei einer hohen Mediumtemperatur der Fall.

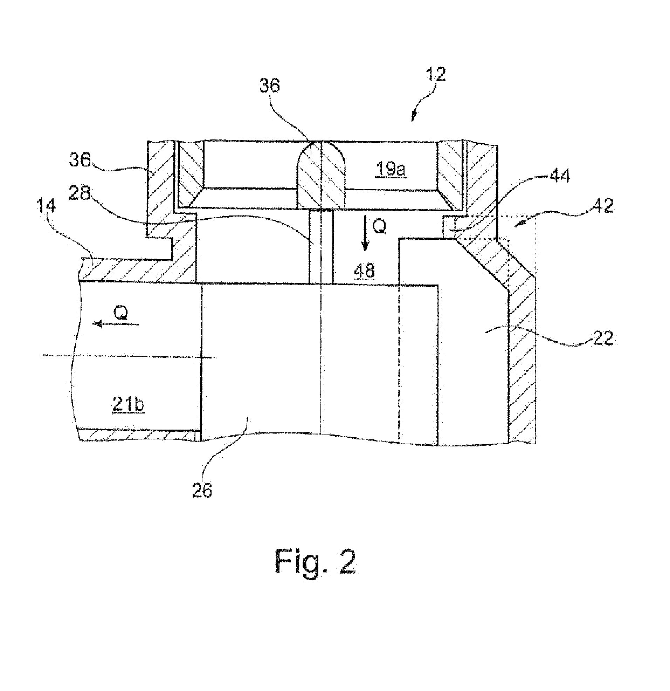

In Fig. 2 ist das Thermostatventil 12 in teilweise geöffnetem Zustand schematisch in einer Schnittdarstellung gezeigt. Der Hub beträgt 3 mm. Der Kolben 28 ist durch das vergrößerte Dehnstoffelement 24 ausgefahren und drückt gegen ein Kraftentlastungselement 46, wodurch die Kappe 30 axial in Richtung des Gehäuseabschnittes 34 verlagert wird und eine vergrößerte Öffnung 48 zum Bypasskanal 22 hergestellt ist. Der Auslassanschluss 20b ist bei einem Hub von 3 mm noch verschlossen.

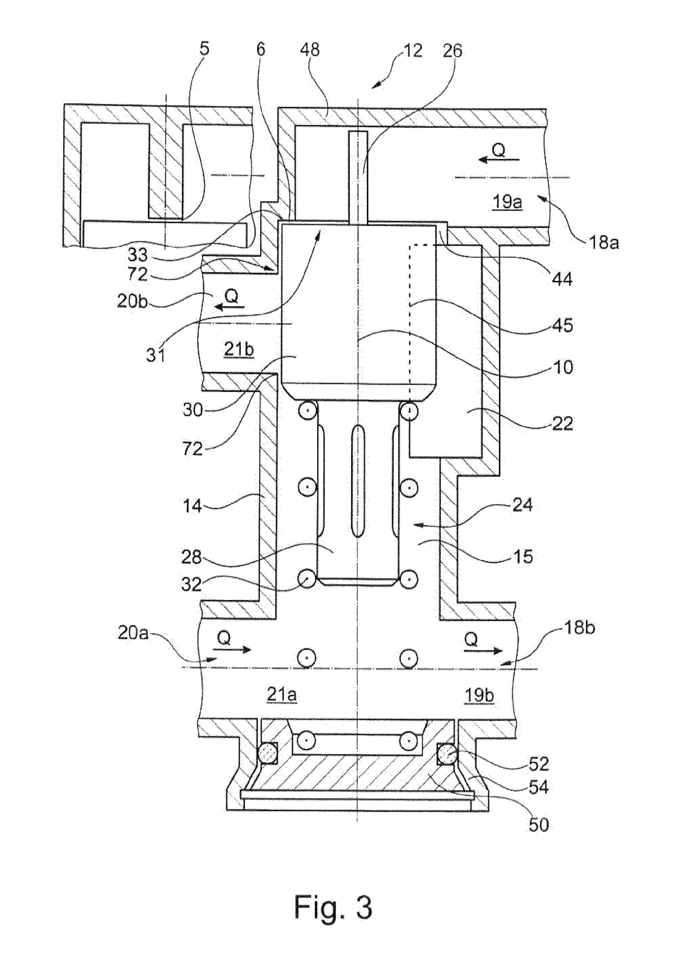

Fig. 3 zeigt in Schnittdarstellung entlang der Mittelachse 10 das Thermostatventil 12, welches einen seitlich am Thermostatgehäuse 14 angeordneten Einlassanschluss 18a für das aus der Wärmequelle kommende Medium aufweist. In der nachfolgenden Beschreibung werden lediglich die Gegenstände und Funktionen beschrieben, die von dem in Figur 1 beschriebenen Thermostatventil 12 verschieden sind. Durch den seitlich angeordneten Einlassanschluss 18a bedingt, dient ein Gehäuseabschnitt 48 des Gehäuses 14 dem Kolben 26 als Gegenlager, der axial dem Kappenabschnitt 31 gegenüber angeordnet ist. Das Gegenlager für das Federelement 32, insbesondere die Rückstellfeder 32 ist ein Gehäuseeinsatzelement 50, welches mit einem Dichtungselement 52, bevorzugt einem O-Ring mit einem Gehäuseabschnitt 54 fluiddicht verbunden ist. Das Gehäuseeinsatzelement 50 ist ebenso wie das Gehäuseeinsatzelement 36 aus dem Thermostatventilgehäuse 14 herausnehmbar, so dass eine Öffnung entstehen kann, durch die Teilelemente des Thermostatventils 12 in das Thermostatventilgehäuse 14 einbringbar sind oder defekte Teile austauschbar sind. Eine derartige Öffnung ist insbesondere vorteilhaft, wenn das Thermostatventilgehäuse 14 einstückig beispielsweise aus einem Spritzguss gefertigt ist. Ein Kraftentlastungselement 56 wird durch Dimensionierung des Absatzes 33 bezogen auf die Ruheposition der Kappe 30 des Arbeitselementes 16 realisiert.

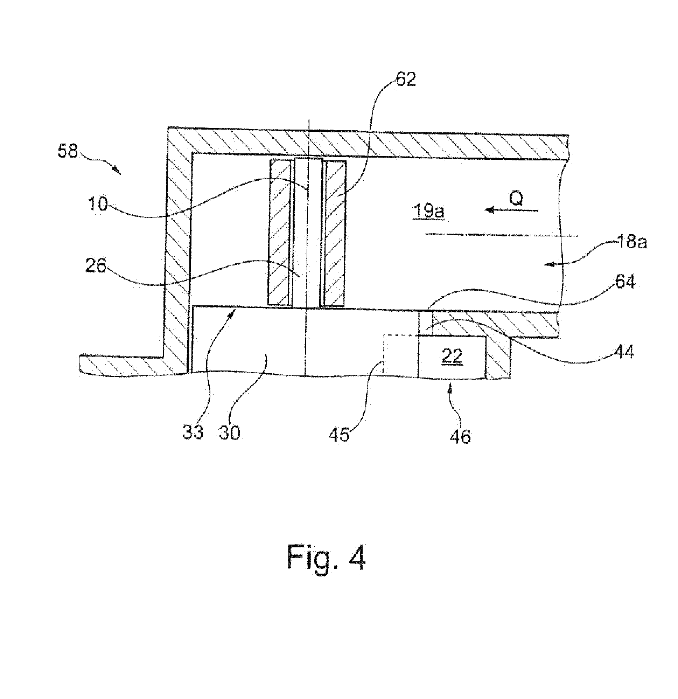

Fig. 4 zeigt in Schnittdarstellung entlang der Mittelachse 10 eine weitere Ausführungsform des oberen Gehäuseabschnittes 58 des Thermostatventilgehäuses 14 des Thermostatventils 12 von Figur 3. Der Absatz 33 ist nicht ausgebildet, sondern es ist eine geradlinig verlaufende Gehäusewand 60 ausgebildet, die im Wesentlichen parallel zur Mittelachse 10 verläuft. Eine Kolbenhülse 62 ist um den Kolben 26 angeordnet, wobei der Kolben 26 in der Kolbenhülse 62 axial bewegbar ist. Die Kolbenhülse 62 definiert den Abstand zwischen der oberen Gehäusewand 48 und der Kappe 30 des Arbeitselementes 16 und definiert somit eine obere Anschlagposition in Ruhestellung, also bei einem Hub von 0 mm, bei der der obere Kappenabschnitt 33 bündig mit einem oberen Nutabschnitt 64 abschließt.

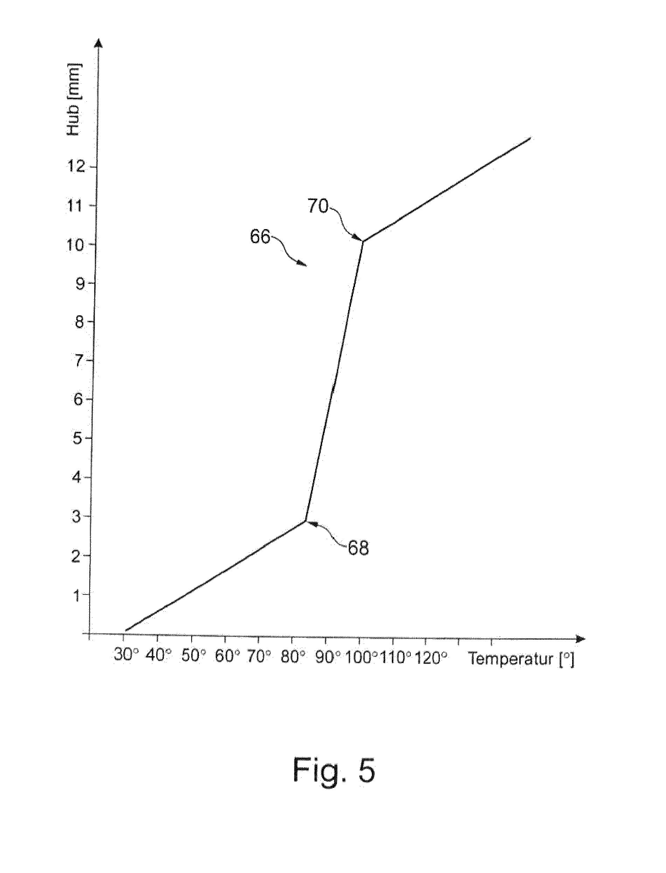

Fig. 5 zeigt ein Diagramm einer Hub-Temperatur-Kennlinie 66, in der die Temperatur auf der x-Achse aufgetragen ist und der Hub des Arbeitselementes 16 auf der y-Achse. Die Kennlinie 66 verläuft zunächst in einem Temperaturbereich zwischen 30°C und 80°C linear ansteigend, wobei bei 80°C ein Hub von 3 mm erzielt werden kann. Bei 80°C weist die Kennlinie einen Knick 68 auf, bei dem der Auslasskanal 21b in Richtung Wärmetauscher geöffnet wird. In einem Temperaturbereich zwischen 80°C und 95°C verläuft die Kennlinienkurve 66 sehr steil, wobei ein Hub von 10,5 mm bei 95°C erreicht werden kann. Nach einem zweiten Knick 70 verläuft die Kennlinienkurve 66 bei Temperaturen größer als 95°C wieder flacher und weist eine geringere Steigung auf, die in etwa der Steigung des ersten Kennlinien-Abschnittes unterhalb des Knicks 68 entspricht.

Im Temperaturbereich zwischen dem Knick 68 und dem Knick 70 ist das Thermastatventil 12 geöffnet und der Auslasskanal 21b ist freigegen, das Medium kann in den Wärmetauscher strömen.

Im Folgenden wird kurz die Funktion des Thermostatventils 12 bei steigender Temperatur des Mediums, beispielsweise des Getriebeöls beschrieben. Zu einem Zeitpunkt t=0 liegt das Medium bei einer bestimmten Temperaturvor, die typischerweise um die 30° oder kleiner ist. Das Thermostatventil 12 befindet sich in seiner Ruhestellung. Steigt die Temperatur des durch den Einlassanschluss 18a in das Thermostatventil 12 strömenden Mediums, wird der Dehnstoff des Dehnstoffelements 24 sich ausdehnen, insbesondere sein Volumen vergrößern. Hierdurch wird die Hülse 28 und die Kappe 30 axial in Richtung des Gehäuseabschnittes 34 oder 54 (je nach Ausführungsform) verlagert. Der Kolben 26 drückt gegen den Gehäuseabschnitt 36, 48 und das Dehnstoffelement 24 verlagert sich axial in entgegengesetzter Richtung. Die Kappe 30 wird parallel zur Gehäusewand des Gehäuses 14 verlagert in Richtung einer Steuerkante 72. Dies erfolgt gemäß der Temperatur-Hub-Kennlinie 66 langsam. Durch das separate Drosselelement 46 und die durch die Nut 44 realisierte Öffnung, wird die anfangs nur durch die Nut 44 definierte, kleine freigegebenen Öffnung 48, die das Medium passieren kann, immer größer. Das Medium kann aber noch nicht in den Auslassanschluss 20b strömen, da die Kappe 30 noch nicht die Steuerkante 72 passiert hat. Folglich kann das Medium nur in den Bypasskanal 22 strömen und von diesem direkt durch den Auslassanschluss 18b in die Wärmequelle zurück. Hierbei wird durch die kleine Öffnung auf Grund der Nut 44 ein durch den Mediumfluss hervorgerufener Druckverlust erzeugt.

Nach dem Knick 70 in der Kennlinie, also ab einer Temperatur von 80° C, wird die relative Hubänderung des Arbeitselementes 16 größer und der Auslassanschluss 20b wird zumindest teilweise freigegeben, das Medium kann zumindest teilweise in den Wärmetauscher strömen, wird in diesem abgekühlt und kann durch den Einlassanschluss 20a wieder in das Thermostatventil 12 zurück in die Wärmequelle gelangen. Ein anderer Teil des Mediums wird aber bis zur kompletten Öffnung des Auslassanschlusses 20b weiter durch den Bypasskanal 22 zum Auslassanschluss 18b strömen. Dieser Betriebszustand wird als Mischbetrieb bezeichnet.

Steigt die Temperatur weiter - bei Temperaturen größer als 95 °C - wird der gesamte Mediumstrom über den Wärmetauscher erfolgen und zurück in die Wärmequelle, da der Auslassanschluss 20b zur Wärmequelle komplett geöffnet ist und der Bypasskanal 22 verschlossen ist.

Somit kann mittels des Drosselelements 46 mit der vorgelagerten Nut 44 im Thermostatgehäuse 14 der Druck im Mediumstrom reguliert und gegebenenfalls reduziert werden.

## Patentansprüche

1. Thermostatventil zum Verbinden einer Wärmequelle, insbesondere eines Getriebes mit einem Wärmetauscher, insbesondere eines Kraftfahrzeugs, welches ein Thermostatventilgehäuse (14) aufweist, in dem ein erster Einlassanschluss (18a) für einen ersten Einlasskanal (19a) und ein zweiter Einlassanschluss (20a) für einen zweiten Einlasskanal (21a) sowie ein erster Auslassanschluss (18b) für einen ersten Auslasskanal (19b) und ein zweiter Auslassanschluss (20b) für einen zweiten Auslasskanal (21b) ausgebildet sind, wobei in einer Aufnahmeöffnung (15) des Thermostatventilgehäuses (14) ein bewegbares Arbeitselement (16) zum Öffnen und Verschließen der Einund Auslasskanäle (18a, 18b, 19a, 19b, 20a, 20b, 21a, 21b) angeordnet ist und ein separates Drosselelement (46) im Thermostatventilgehäuse (14) zwischen dem ersten Einlassanschluss (18a) und dem ersten Auslassanschluss (18b) angeordnet ist.

2. Thermostatventil nach Anspruch 1, **dadurch gekennzeichnet, dass** das Drosselelement (46) eine Ausnehmung (44), insbesondere eine im Thermostatventilgehäuse (14) ausgebildete Nut (44) aufweist.

3. Thermostatventil nach Anspruch 1 oder Anspruch 2, **dadurch gekennzeichnet, dass** zwischen dem ersten Einlasskanal (19a) und dem ersten Auslasskanal (19b) ein Bypasskanal (22) angeordnet ist.

4. Thermostatventil nach einem der vorhergehenden Ansprüche, **dadurch gekennzeichnet, dass** das Drosselelement (46) zwischen dem ersten Einlasskanal (19a) und dem Bypasskanal (22) angeordnet ist.

5. Thermostatventil nach einem der vorhergehenden Ansprüche, **dadurch gekennzeichnet, dass** das Drosselelement (46) zwischen dem Bypasskanal (22) und dem ersten Auslassanschluss (19b) angeordnet ist.

6. Thermostatventil nach einem der vorhergehenden Ansprüche, **dadurch gekennzeichnet, dass** der erste Einlassanschluss (18a) und der zweite Auslassanschluss (20b) in axialer Richtung auf einer unterschiedlicher Höhe im Thermostatgehäuses (14) angeordnet sind.

7. Thermostatventil nach einem der vorhergehenden Ansprüche, **dadurch gekennzeichnet, dass** der Bypasskanal (22) beim Erreichen oder Überschreiten eines oberen Temperaturgrenzwertes (70) geschlossen ist.

8. Thermostatventil nach einem der vorhergehenden Ansprüche, **dadurch gekennzeichnet, dass** das eine Kappe (30) des Arbeitselementes (16) durch ein Federelement (32) belastet ist, welches das Arbeitselement (16) in eine Stellung zwingt, in der die Verbindung zwischen dem Bypasskanal (22) und dem ersten Auslasskanal (19b) frei ist.

9. Thermostatventil nach einem der vorhergehenden Ansprüche, **dadurch gekennzeichnet, dass** eine Kraftentlastungseinrichtung (46, 56) vorgesehen ist.

10. Kühlsystem, insbesondere für ein Kraftfahrzeug mit einem Kühlkreislauf und einer Wärmequelle, insbesondere einem Getriebe sowie mindestens einem Wärmetauscher, wobei ein Thermostatventil (12) gemäß einem der Ansprüche 1 bis 9 die Wärmequelle, insbesondere das Getriebe mit dem Wärmetauscher verbindet.

11. Kühlsystem gemäß Anspruch 10, **dadurch gekennzeichnet, dass** der Wärmetauscher als ein Öl-Luft-Kühler oder ein Öl-Wasser-Kühler ausgebildet ist.
